# EUROPÄISCHE PATENTSCHRIFT

(11) **EP 0 499 798 B1**
(45) Veröffentlichungstag und Bekanntmachung des Hinweises auf die Patenterteilung: **03.04.1996**
(21) Anmeldenummer: 92100819.9
(22) Anmeldetag: 18.01.1992
(51) Int. Cl.: A01N 57/20, A01N 25/04

(54) **Flüssige Zubereitungen von Herbizidmischungen auf Basis Glufosinate**
Liquid preparations of herbicidal mixtures based on glufosinate
Préparations liquides de mélanges d'herbicides à base de glufosinate

(30) Priorität: 22.01.1991 DE 4101691
(43) Veröffentlichungstag der Anmeldung: 26.08.1992
(73) Patentinhaber: Hoechst Schering AgrEvo GmbH, D-13342 Berlin (DE)
(72) Erfinder: Frisch, Gerhard, Dr., W-6393 Wehrheim/Taunus (DE); Maier, Thomas, Dr., W-6000 Frankfurt am Main 71 (DE)

(56) Entgegenhaltungen:
- EP-A- 0 009 620
- EP-A- 0 297 305
- EP-A- 0 336 151
- EP-A- 0 407 874

## Beschreibung

Die Erfindung betrifft das Gebiet der Pflanzenschutzmittel, insbesondere der Formulierungen des Herbizids Glufosinate (d.h. 2-Amino-4-(hydroxymethylphosphinyl)-butansäure und deren Salze, auch als Phosphinothricin bezeichnet, s. US-A-4, 168,963) und dessen Salze in Kombination mit mindestens einem in der wäßrigen Phase dispergierten Herbizid.

Bekannt sind wäßrige Formulierungen des Wirkstoffes Glufosinate (s. EP-A-48436 oder US-A-4400196), wie auch Kombinationen von Glufosinate mit verschiedenen Wirkstoffen auf Basis von substituierten Phenylharnstoffderivaten wie Linuron (s. EP-A-0402769) oder Monolinuron (s. EP-A-0402770) und mit Triazinen wie beispielsweise Simazin mit Diuron (s. EP-A-0297305). Diese Formulierungen sind teilweise im Handel und anwendungstechnisch einwandfrei. Sie sind allerdings teilweise von vergleichsweise hoher Viskosität. Dies ist häufig eine Eigenart von Kombinationsformulierungen; weil es bei solchen meist notwendig ist, eine besondere Mischung aus Tensiden einzusetzen, um lagerstabile und anwendungstechnisch einwandfreie Formulierungen herstellen zu können, ist der Tensidanteil eher höher ist als bei Formulierungen eines Einzelwirkstoffs.

Es ist dem Fachmann bekannt, daß eine unüberschaubar große Zahl von Eigenschaften der Komponenten in Zwei- oder Mehrphasensystemen Einfluß auf die Stabilität dieser Systeme haben können. Allein aufgrund der unterschiedlichen Ionizität der jeweiligen Lösung, der Oberflächenladung und -beschaffenheit der Partikel, deren Löslichkeit, des Belegungsgrades und der Belegungsart der dispergierten Partikel durch die entsprechenden Tenside incl. deren sterischer, entropischer und elektrostatischer Eigenschaften - um einige Effekte, die für die zeitliche Stabilität eines Zwei- oder Mehrphasensystems eine entscheidende Rolle spielen, zu nennen - ist es bei der Aufstellung von Rezepturen für die Herstellung von neuen Formulierungen kaum erfolgreich, nur in Analogien zu denken. In vielen Fällen kann man beispielsweise mit einer bestimmten Tensidkombination relativ hochprozentige Dispersionsformulierungen herstellen, wie es bei einigen der oben erwähnten Beispiele zutrifft. Ändert man bei gleicher Tensidzusammensetzung jedoch den Wirkstoffgehalt beispielsweise zu kleineren Werten, dann wird in einem sehr großen Teil der Fälle das System instabil, d.h. Separation, Sedimentation, Zementierung etc. tritt schon nach kurzer Standzeit ein. Daher ist es auf dem Gebiet der Formulierung von Pflanzenschutzmitteln durchaus nicht zu erwarten, daß in einer Formulierung der Wirkstoffe x und y die Tenside a,b,c geeignet sind, wenn dies bereits für eine Formulierung der Wirkstoffe y und z bekannt ist. Dies gilt dann erst recht nicht, wenn die Tenside in der bekannten Formulierung ungleich a,b,c sind.

Gleiches gilt bei einem Mehrphasensystem auch für die Viskosität des Systems. Diese wird bei gleicher Aktivsubstanz-Zusammensetzung nicht nur von der Feinheit der dispergierten Partikel, sondern auch besonders stark von der Art der Tenside im System bestimmt. Bei Systemen mit dispergierten Teilchen ist eine höhere Viskosität von Vorteil, um die Sedimentation der Teilchen zu minimieren. Wird die Viskosität allerdings zu hoch, ergeben sich vor allem beim Entleeren von Behältnissen und beim Ansetzen der Spritzbrühe Probleme.

Bekannt ist auch, daß die Viskosität von wäßrigen Lösungen, die Laurylethersulfatnatriumsalze enthalten, empfindlich vom Elektrolytgehalt der Lösung abhängt. Beispielsweise liegt die Viskosität bei einer Mischung von 15 % Na-Laurylethersulfat, 1 % NaCl und 84 % Wasser bei 20°C in der Höhe von 23 mPas, bei einem Zusatz von 6 % NaCl aber bei 74000 mPas (mPas = Millipascalsekunde, gemessen mit einem Höppler-Viskosimeter, Werte aus Datenblatt ®Genapol LRO-Paste, Hoechst AG, 1982).

Na-Laurylethersulfate sind nach EP-A-0048436 (US-A-303373) besonders geeignete Hilfsmittel, um Glufosinate zu einer besonders guten Wirkungsentfaltung zu bringen. Auch in EP-A-0297305 wird Na-Laurylethersulfat als Bestandteil der Formulierungen aufgeführt; hier werden vergleichsweise recht hohe Viskositätswerte gefunden (z.B. ca. 3200 mPas bei 13 Upm und ca. 1770 mPas bei 112 Upm, gemessen bei ca. 20° mit dem Rotationsviskosimeter Rheomat 115 der Firma Contraves), die bei der Herstellung und Anwendung zu Problemen führen können. Insbesondere wegen der üblicherweise eingesetzten Salze von Glufosinate und der starken Abhängigkeit der Viskosität vom Salzgehalt muß der Wirkstoffgehalt in derartigen Formulierungen vergleichsweise niedrig gehalten werden.

Es besteht deshalb die Aufgabe stabile wäßrige Mischformulierungen mit Glufosinate bereitzustellen, die verhältnismäßig niedrig viskos sind und eine gegen den Formulierungen, die Laurylethersulfate als Haupttensid enthalten, vergleichbare bis bessere Wirkungsentfaltung der Wirkstoffe ermöglichen, ohne Laurylethersulfate zu enthalten.

Gegenstand der Erfindung sind wäßrige herbizide Zubereitungen, die Glufosinate oder deren Salze in gelöster Form und mindestens einen weiteren Herbizid-Wirkstoff in dispergierter Form enthalten, dadurch gekennzeichnet, daß sie
a) 0,1 bis 60 Gew.-%, vorzugsweise 2 bis 45 Gew.-%, einer Wirkstoffkombination aus
   a1) Glufosinate oder dessen Salze und mindestens
   a2) einem dispergierten, vorzugsweise in fester Form dispergierten (suspendierten) Herbizid-Wirkstoff im Verhältnis 1:100 bis 100:1, vorzugsweise 1:10 bis 10:1, insbesondere 1:5 bis 3:1, der Wirkstoffe a1:a2,
b) 0,5 bis 30 Gew.-%, bezogen auf aktive Substanz, vorzugsweise 1,5 bis 24 Gew.-%, eines Tensids aus der Gruppe der langkettigen α-Olefinsulfonate,
c) 0,5 bis 20 Gew.-%, bezogen auf aktive Substanz, vorzugsweise 1 bis 10 Gew.-%, eines oder mehrere Cotenside aus der Gruppe enthaltend Kondensationsprodukte auf Basis von Aromaten (z.B. Kresole, Phenole), Alkanalen und Disulfit, Kondensationsprodukte auf Basis von Naphthalinsulfonsäuren oder deren Salzen sowie Ligninsulfonate,
d) 10 bis 70 Gew.-%, vorzugsweise 15 bis 55 Gew.-%, Wasser und
e) 0 bis 15 Gew.-%, vorzugsweise 5 bis 10 Gew.-%, üblicher Hilfsmittel, wie Verdickungsmittel, Entschäumer, Konservierungsmittel, Frostschutzmittel und das Eintrocknen verhindernde Mittel
enthalten.

Die erfindungsgemäßen wäßrigen, herbiziden Wirkstofformulierungen auf Basis Glufosinate, enthalten mindestens 2 Phasen, d.h. die wäßrige Phase, in der Glufosinate gelöst ist, und mindestens eine weitere flüssige oder feste Phase, die einen oder mehrere Herbizidwirkstoffe enthält und in der wäßrigen Phase dispergiert ist.

Vorzugsweise sind als Wirkstoffe vom Typ a2 solche geeignet, die in der erfindungsgemäßen Zubereitung in fest dispergierter Form vorliegen. Geeignet sind beispielsweise Phenylharnstoffderivate, wie z.B. Diuron, Linuron, Monolinuron, Isoproturon, Chlortoluron, Neburon und Monuron, und/oder Triazine, wie z.B. Simazin, Atrazin und Terbuthylazin. Die genannten Herbizide sind allgemein bekannt und z.B. in "The Pesticide Manual" 9th edition, British Crop Protection Council 1991 beschrieben. Bevorzugt sind Diuron und/oder Simazin.

Von Glufosinate oder dessen Salze sind in der Mischung in der Regel 0,1 - 30 Gew.-%, vorzugsweise 2 - 22 Gew.-%, von den fest suspendierten Wirkstoff(en) in der Regel 0,1- 45 Gew.-%, vorzugsweise 2 - 37 Gew.-%, enthalten. Es können, sofern vorhanden, sowohl die optisch reinen Isomeren der Wirkstoffe sowie deren Gemische eingesetzt werden.

Die erfindungsgemäß eingesetzten Tensidmischung besteht aus mindestens 2 Komponenten, die es überraschenderweise zuläßt, Zubereitungen mit einem Wirkstoffanteil von 60 Gew.-% herzustellen, die niedrig viskos, lagerstabil und anwendungstechnisch einwandfrei sind.

Bei den Tensiden (b) handelt es sich vorzugsweise um langkettige Olefinsulfonate mit 12 bis 20 C-Atomen, insbesondere ein C₁₂-C₂₀-α-Olefinsulfonatnatriumsalz mit einem überwiegenden Anteil an C₁₄-C₁₆ (®Hostapur OSB, Hoechst AG), das beispielsweise sowohl in Pulverform als auch in wäßriger Lösung vorliegen kann.

Als Cotenside kommen in Frage: Kondensationsprodukte auf Aromatenbasis (Kresole, Phenole) mit Formaldehyd und Disulfit, wie beispielsweise Hoe S1494 (Kondensationsprodukt auf Basis Kresol, Alkylphenol, Formaldehydund Natriumbisulfit; Hoechst AG), in wäßriger Lösung oder als Pulver, und ®Tamol NN 8906 (Na-Salze von Naphthalinsulfonsäurekondensationsprodukten, BASF), oder auch Ligninsulfonate, wie z.B ®Borresperse 3A, ®Vanisperse CNH (Borregard Sarpsborg/Norwegen). Das Verhältnis der Cotenside zum α-Olefinsulfonat ist vorzugsweise von 1:20 bis 10:1, insbesondere 1:15 bis 5:1.

Die erfindungsgemäßen Zubereitungen können noch übliche Formulierungshilfsmittel wie handelsübliche Verdickungsmittel, z.B. solche auf Polysaccharidbasis wie ®Rhodopol 23 (Rhone Poulenc) oder ®Kelzan 5 (Kelco Corp., USA), solche auf Methylcellulosebasis wie die ®Tylose-Reihe von Hoechst, Mittel auf anorganischer Basis wie die ®Darvan-Reihe (Vanderbilt Corp., USA) oder ®Bentone-Reihe (NL-Chemicals), Entschäumer auf Siliconbasis wie die Antischaumemulsions- bzw. mittelreihe von Wacker oder die ®Silcolapse- bzw. ®Rhodorsil-Reihe von Rhone Poulenc, Frostschutzmittel und/oder das Eintrocknen verhindernde Mittel auf Basis von Polyolen, wie Ethylenglykole, Propylenglykol, Glyzerin und Polyalkylenglykolen, und Harnstoff enthalten. Ebenso können die Formulierungen handelsübliche Konservierungsmittel enthalten.

Die Herstellung der erfindungsgemäßen Zubereitungen kann in der üblichen Weise durch Naßvermahlung der gesamten Kombination von Wirk- und Hilfsstoffen oder des Feststoffanteils mit Wasser und Hilfsmitteln erfolgen. Die Herstellung kann beispielsweise auch nach dem in der EP-A-0130370 beschriebenen Verfahren erfolgen, wobei man eine wäßrige Wirkstoffdispersion des oder der Wirkstoffe des erfindungsgemäßen Typs a2) zusammen mit einer wäßrigen Lösung von Glufosinate oder dessen Salz in eine Kolloidmühle dosiert und innig vermischt.

In den weiter unten stehenden Tabellen 1 und 2 werden Beispiele für die erfindungsgemäßen Zubereitungen aufgeführt.

Die Viskosität der erfindungsgemäßen Zubereitungen ist überraschenderweise niedrig oder ermöglicht bei gleicher Viskosität höhere Wirkstoffgehalte als vergleichbare Formulierungen mit Na-Laurylethersulfat als Haupttensid. Beispielsweise wurde in den Beispielen 1 und 2 der Tabelle 1 als Viskosität bei 20°C und 13 Upm des Viskosimeters (Rheomat 115, Fa. Contraves) ca. 250 mPas und bei 112 Upm ca. 100 mPas gemessen. In den übrigen Beispielen werden vergleichbar niedrige Viskositäten erhalten.

Die biologische Wirksamkeit, die bei Verwendung der erfindungsgemäßen Zubereitungen im Vergleich zu Tankmischungen von Glufosinate mit Na-Laurylethersulfat als Handelsformulierung und wäßriger Dispersion von Diuron bei wirkstoffgleicher Aufwandmenge erhalten wird, ist gleichwertig bis teilweise besser.

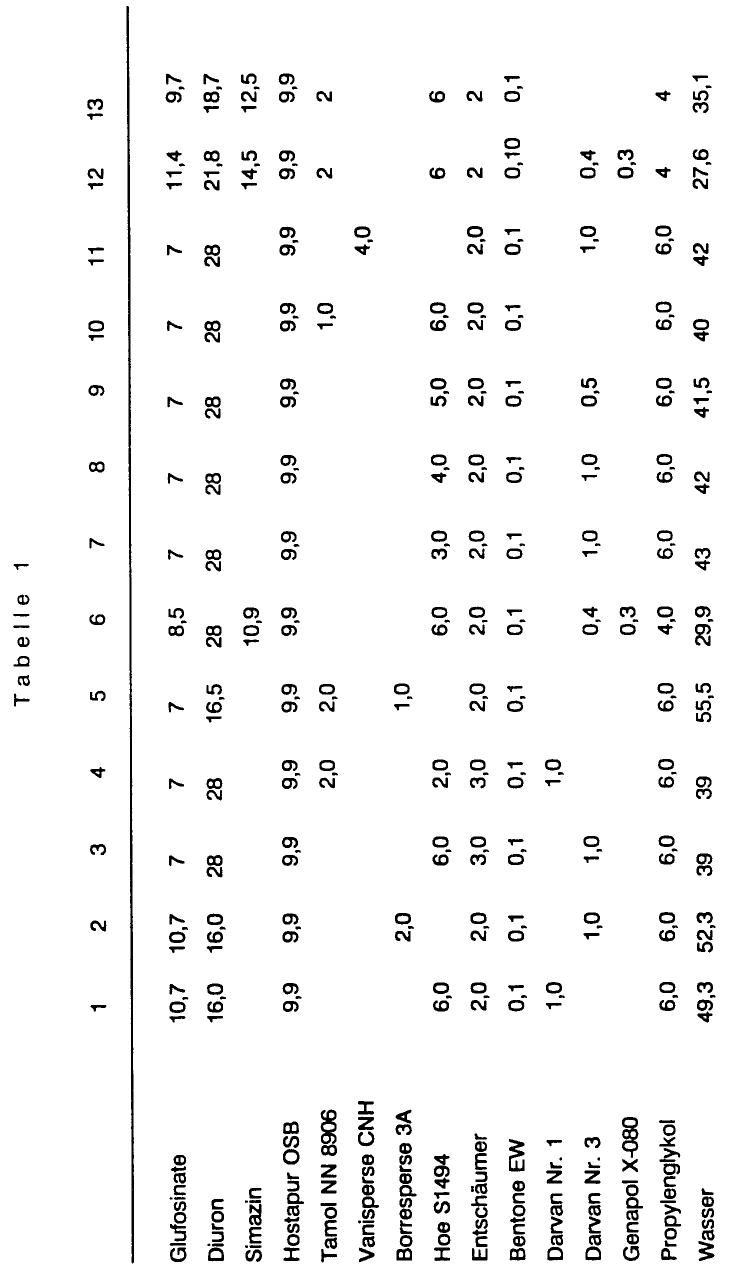

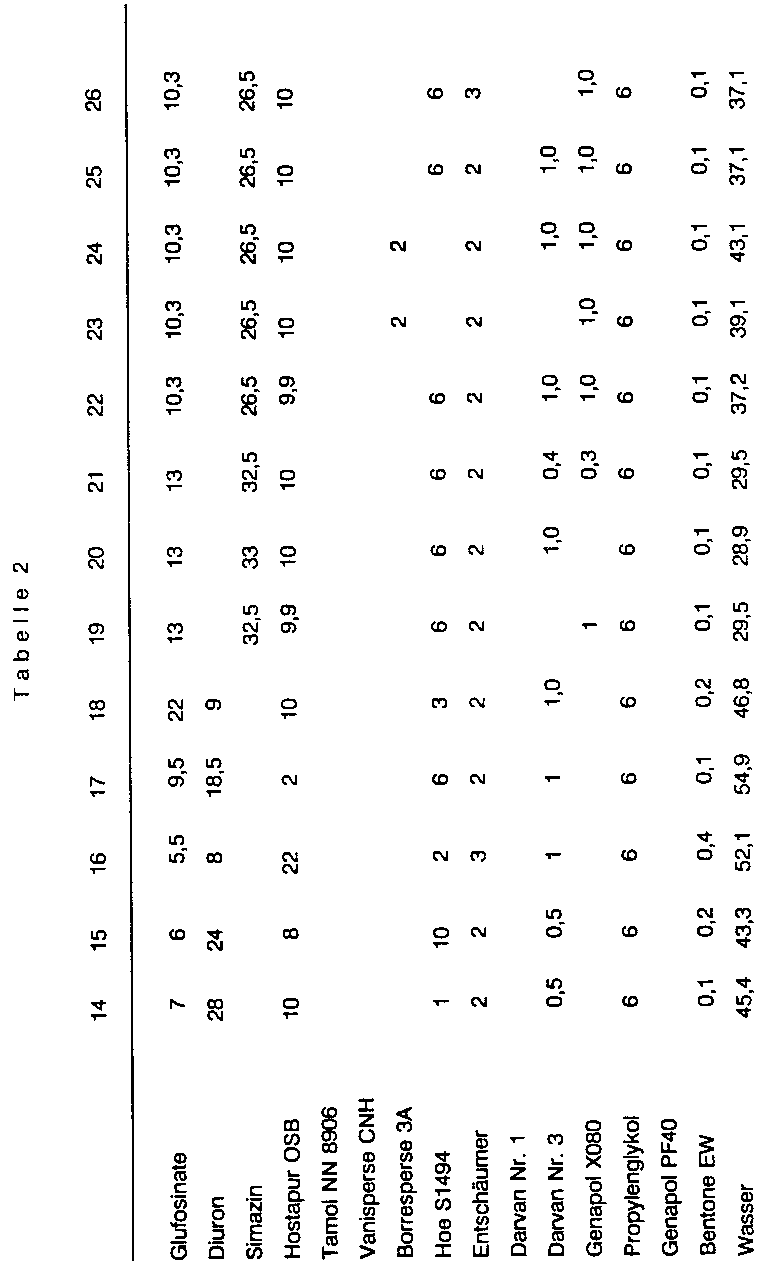

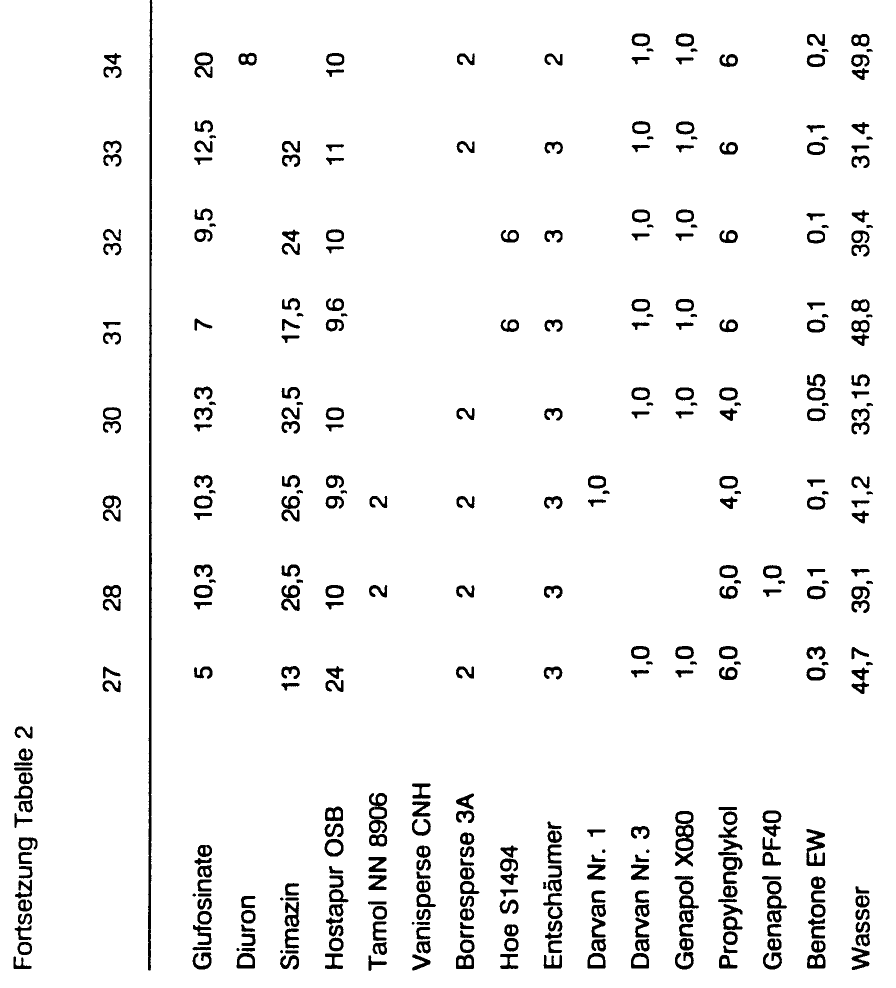

### Abkürzungen in Tabellen 1 und 2

- Glufosinate: = Glufosinate-ammoniumsalz
- Hostapur OSB: = α-Olefinsulfonat-Na mit überweigend C₁₄-C₁₆ (Hoechst)
- Tamol NN 8906: = Na-Salz eines Naphthalinsulfonsäurekondensationsprodukts (BASF)
- Vanisperse CNH: = Ligninsulfonat (Borregard)
- Borresperse 3A: = Ligninsulfonat (Borregard)
- Hoe S1494: = Kondensationsprodukt auf Basis Kresol, Alkylphenol, Formaldehyd, Natriumbisulfit (Hoechst)
- Bentone EW: = Verdicker auf Basis von Magnesium-Montmorrilonit (NL-Chemie)
- Darvan Nr. 1: = Natriumsalz von polymerisierten Alkylnaphthalinsulfonsäuren (Vanderbilt Corp.)
- Darvan Nr. 3: = Natriumsalz von polymerisierten substituierten Alkylbenzolsulfonsäuren, enthält anorg. Suspendiermittel (Vanderbilt Corp.)
- Genapol X080: = Fettalkoholpolyglykolether (Hoechst)
- Genapol PF40: = Blockpolymer von Ethylenoxid und Propylenoxid (Hoechst)

## Patentansprüche (Patentansprüche für folgende(n) Vertragsstaat(en): BE, DE, FR, GB, IT, NL)

1. Herbizide wäßrige Zubereitungen, die Glufosinate oder dessen Salze in gelöster Form und mindestens einen weiteren Herbizid-Wirkstoff in dispergierter Form enthalten, dadurch gekennzeichnet, daß sie
a) 0,1 bis 60 Gew.-% einer Wirkstoffkombination aus
a1) Glufosinate oder dessen Salze und mindestens
a2) einem dispergierten Herbizid-Wirkstoff im Verhältnis 1:100 bis 100:1 der Wirkstoffe a1:a2,
b) 0,5 bis 30 Gew.-%, bezogen auf aktive Substanz, eines Tensids aus der Gruppe der langkettigen α-Olefinsulfonate,
c) 0,5 bis 20 Gew.-%, bezogen auf aktive Substanz, eines oder mehrerer Cotenside aus der Gruppe enthaltend Kondensationsprodukte auf Basis von Aromaten, Alkanalen und Disulfit, Kondensationsprodukte auf Basis von Naphthalinsulfonsäure oder deren Salze sowie Ligninsulfonate,
d) 10 bis 70 Gew.-% Wasser und
e) 0 bis 15 Gew.-% üblicher Hilfsmittel,
enthalten.

2. Zubereitungen nach Anspruch 1, dadurch gekennzeichnet, daß
a) 2 bis 45 Gew.-% einer Wirkstoffkombination aus
a1) Glufosinate oder dessen Salze und mindestens
a2) einem dispergierten Herbizid-Wirkstoff im Verhältnis 1:10 bis 10:1 der Wirkstoffe a1:a2,
b) 1,5 bis 24 Gew.-%, bezogen auf aktive Substanz, eines Tensids aus der Gruppe der langkettigen α-Olefinsulfonate,
c) 1 bis 10 Gew.-%, bezogen auf aktive Substanz, Cotenside,
d) 15 bis 50 Gew.-% Wasser und
e) 5 bis 10 Gew.-% üblicher Hilfsmittel
enthalten.

3. Zubereitungen nach Anspruch 1, dadurch gekennzeichnet, daß sie als Wirkstoffe a2 fest dispergierte Herbizide aus der Gruppe enthaltend Phenylharnstoffe und Triazine enthalten.

4. Zubereitung nach Anspruch 3, dadurch gekennzeichnet, daß die fest dispergierten Wirkstoffe aus der Gruppe enthaltend Diuron und Triazin sind.

5. Zubereitung nach Anspruch 1 oder 2, dadurch gekennzeichnet, daß der fest dispergierte Wirkstoff Diuron ist.

6. Zubereitungen nach einem oder mehreren der Ansprüche 1 bis 5, dadurch gekennzeichnet, daß als Wirkstoff des Typs a1 Glufosinateammoniumsalz eingesetzt wird.

7. Zubereitungen nach einem oder mehreren der Ansprüche 1 bis 6, dadurch gekennzeichnet, daß als Komponente b) ein C₁₂-C₂₀-α-Olefinsulfonatnatriumsalz mit überwiegendem Anteil an C₁₄-C₁₆ eingesetzt wird.

8. Verfahren zur Herstellung der nach einem oder mehreren der Ansprüche 1 bis 7 definierten Zubereitungen, dadurch gekennzeichnet, daß man die Komponenten a) bis e) vermischt und in einer Dispersions- oder Kolloidmühle fein vermahlt.

9. Verfahren zur Bekämpfung von unerwünschtem Pflanzenwuchs, dadurch gekennzeichnet, daß man eine wirksame Menge eines der nach einem oder mehreren der Ansprüche 1 bis 7 definierten Zubereitungen auf die Pflanzen und/oder deren Anbaufläche appliziert.

10. Verwendung der nach einem oder mehreren der Ansprüche 1 bis 7 definierten Zubereitungen zur Bekämpfung von unerwünschtem Pflanzenwuchs.

## Patentansprüche (Patentansprüche für folgende(n) Vertragsstaat(en): ES)

1. Verfahren zur Herstellung von herbiziden wäßrigen Zubereitungen, die Glufosinate oder dessen Salze in gelöster Form und mindestens einen weiteren Herbizid-Wirkstoff in dispergierter Form enthalten, dadurch gekennzeichnet, daß man die Komponenten
a) 0,1 bis 60 Gew.-% einer Wirkstoffkombination aus
a1) Glufosinate oder dessen Salze und mindestens
a2) einem dispergierten Herbizid-Wirkstoff im Verhältnis 1:100 bis 100:1 der Wirkstoffe a1:a2,
b) 0,5 bis 30 Gew.-%, bezogen auf aktive Substanz, eines Tensids aus der Gruppe der langkettigen α-Olefinsulfonate,
c) 0,5 bis 20 Gew.-%, bezogen auf aktive Substanz, eines oder mehrerer Cotenside aus der Gruppe enthaltend Kondensationsprodukte auf Basis von Aromaten, Alkanalen und Disulfit, Kondensationsprodukte auf Basis von Naphthalinsulfonsäure oder den Salze sowie Ligninsulfonate,
d) 10 bis 70 Gew.-% Wasser und
e) 0 bis 15 Gew.-% üblicher Hilfsmittel,
vermischt und in einer Dispersions- oder Kolloidmühle fein vermahlt.

2. Verfahren nach Anspruch 1, dadurch gekennzeichnet, daß man
a) 2 bis 45 Gew.-% einer Wirkstoffkombination aus
a1) Glufosinate oder dessen Salze und mindestens
a2) einem dispergierten Herbizid-Wirkstoff im Verhältnis 1:10 bis 10:1 der Wirkstoffe a1:a2,
b) 1,5 bis 24 Gew.-%, bezogen auf aktive Substanz, eines Tensids aus der Gruppe der langkettigen α-Olefinsulfonate,
c) 1 bis 10 Gew.-%, bezogen auf aktive Substanz, Cotenside,
d) 15 bis 50 Gew.-% Wasser und
e) 5 bis 10 Gew.-% üblicher Hilfsmittel
einsetzt.

3. Verfahren nach Anspruch 1, dadurch gekennzeichnet, daß man als Wirkstoffe a2 fest dispergierte Herbizide aus der Gruppe enthaltend Phenylharnstoffe und Triazine einsetzt.

4. Verfahren nach Anspruch 3, dadurch gekennzeichnet, daß die fest dispergierten Wirkstoffe aus der Gruppe enthaltend Diuron und Triazin sind.

5. Verfahren nach Anspruch 1 oder 2, dadurch gekennzeichnet, daß der fest dispergierte Wirkstoff Diuron ist.

6. Verfahren nach einem oder mehreren der Ansprüche 1 bis 5, dadurch gekennzeichnet, daß als Wirkstoff des Typs a1 Glufosinateammoniumsalz eingesetzt wird.

7. Verfahren nach einem oder mehreren der Ansprüche 1 bis 6, dadurch gekennzeichnet, daß als Komponente b) ein C₁₂-C₂₀-α-Olefinsulfonatnatriumsalz mit überwiegendem Anteil an C₁₄-C₁₆ eingesetzt wird.

8. Verfahren zur Bekämpfung von unerwünschtem Pflanzenwuchs, dadurch gekennzeichnet, daß man eine wirksame Menge eines der wie in einem oder mehreren der Ansprüche 1 bis 7 definierten Zubereitungen auf die Pflanzen und/oder deren Anbaufläche appliziert.

9. Verwendung der wie in einem oder mehreren der Ansprüche 1 bis 7 definierten Zubereitungen zur Bekämpfung von unerwünschtem Pflanzenwuchs.

## Claims (Claims for the following Contracting State(s): BE, DE, FR, GB, IT, NL)

1. A herbicidal aqueous preparation which contains glufosinate or its salts in dissolved form and at least one further herbicide active substance in dispersed form, which preparation comprises
a) 0.1 to 60% by weight of an active substance combination of
a1) glufosinate or its salts and at least
a2) one dispersed herbicide active substance in the ratio 1:100 to 100:1 of the active substances a1:a2,
b) 0.5 to 30% by weight, relative to active substance, of a surfactant from the long-chain α-olefin sulfonate group,
c) 0.5 to 20% by weight, relative to active substance, of one or more co-surfactants from the group comprising condensation products based on aromatics, alkanals and disulfites, condensation products based on naphthalenesulfonic acids or their salts and ligninsulfonates,
d) 10 to 70% by weight of water and
e) 0 to 15% by weight of customary auxiliary.

2. A preparation as claimed in claim 1, which contains
a) 2 to 45% by weight of an active substance combination of
a1) glufosinate or its salts and at least
a2) one dispersed herbicide active substance in the ratio 1:10 to 10:1 of the active substances a1:a2,
b) 1.5 to 24% by weight, relative to active substance, of a surfactant from the long-chain α-olefin sulfonate group,
c) 1 to 10% by weight, relative to active substance, of co-surfactants,
d) 15 to 50% by weight of water and
e) 5 to 10% by weight of customary auxiliary.

3. A preparation as claimed in claim 1, which contains solid dispersed herbicides from the group comprising phenylureas and triazines as active substances a2.

4. A preparation as claimed in claim 3, wherein the solid dispersed active substances are from the group comprising diuron and triazine.

5. A preparation as claimed in claim 1 or 2, wherein the solid dispersed active substance is diuron.

6. A preparation as claimed in one or more of claims 1 to 5, wherein glufosinate ammonium salt is employed as the active substance of the type a1.

7. A preparation as claimed in one or more of claims 1 to 6, wherein a C₁₂-C₂₀-α-olefin sulfonate sodium salt having a substantial content of C₁₄-C₁₆ is employed as component b).

8. A process for the production of the preparations defined in one or more of claims 1 to 7, which comprises finely mixing the components a) to e) and finely grinding in a dispersing or colloid mill.

9. A process for controlling undesired plant growth, which comprises applying an effective amount of one of the preparations defined in one or more of claims 1 to 7 to the plants and/or their cultivation area.

10. The use of the preparations defined in one or more of claims 1 to 7 for controlling undesired plant growth.

## Claims (Claims for the following Contracting State(s): ES)

1. A process for the production of a herbicidal aqueous preparation which contains glufosinate or its salts in dissolved form and at least one further herbicide active substance in dispersed form, which preparation comprises
a) 0.1 to 60% by weight of an active substance combination of
a1) glufosinate or its salts and at least
a2) one dispersed herbicide active substance in the ratio 1:100 to 100:1 of the active substances a1:a2,
b) 0.5 to 30% by weight, relative to active substance, of a surfactant from the long-chain α-olefin sulfonate group,
c) 0.5 to 20% by weight, relative to active substance, of one or more co-surfactants from the group comprising condensation products based on aromatics, alkanals and disulfites, condensation products based on naphthalenesulfonic acids or their salts and ligninsulfonates,
d) 10 to 70% by weight of water and
e) 0 to 15% by weight of customary auxiliary.

2. A process for the production of a preparation as claimed in claim 1, which contains
a) 2 to 45% by weight of an active substance combination of
a1) glufosinate or its salts and at least
a2) one dispersed herbicide active substance in the ratio 1:10 to 10:1 of the active substances a1:a2,
b) 1.5 to 24% by weight, relative to active substance, of a surfactant from the long-chain α-olefin sulfonate group,
c) 1 to 10% by weight, relative to active substance, of co-surfactants,
d) 15 to 50% by weight of water and
e) 5 to 10% by weight of customary auxiliary.

3. A process for the production of a preparation as claimed in claim 1, which contains solid dispersed herbicides from the group comprising phenylureas and triazines as active substances a2.

4. A process for the production of a preparation as claimed in claim 3, wherein the solid dispersed active substances are from the group comprising diuron and triazine.

5. A process for the production of a preparation as claimed in claim 1 or 2, wherein the solid dispersed active substance is diuron.

6. A process for the production of a preparation as claimed in one or more of claims 1 to 5, wherein glufosinate ammonium salt is employed as the active substance of the type a1.

7. A process for the production of a preparation as claimed in one or more of claims 1 to 6, wherein a C₁₂-C₂₀-α-olefin sulfonate sodium salt having a substantial content of C₁₄-C₁₆ is employed as component b).

8. A process for controlling undesired plant growth, which comprises applying an effective amount of one of the preparations defined in one or more of claims 1 to 7 to the plants and/or their cultivation area.

9. The use of the preparations defined in one or more of claims 1 to 7 for controlling undesired plant growth.

## Revendications (Revendications pour l'(les) Etat(s) contractant(s) suivant(s): BE, DE, FR, GB, IT, NL)

1. Préparations aqueuses d'herbicides, qui contiennent le glufosinate ou ses sels sous forme dissoute et au moins une autre substance active herbicide sous forme dispersée, caractérisées en ce qu'elles contiennent
a) de 0,1 à 60 % en poids d'une composition de substances actives composée
a1) de glufosinate ou ses sels et au moins
a2) d'une substance active herbicide dispersée dans un rapport de 1:100 à 100:1 des substances a1:a2,
b) de 0,5 à 30 % en poids par rapport à la substance active d'un agent de surface pris dans le groupe des α-oléfinesulfonates à longue chaîne,
c) de 0,5 à 20 % en poids par rapport à la substance active d'un ou plusieurs co-agents de surface pris dans le groupe comportant des produits de condensation à base de composés aromatiques, d'alcanals et de disulfites, des produits de condensation à base d'acides naphtalènesulfoniques ou de leurs sels comme les lignosulfonates,
d) de 10 à 70 % en poids d'eau et
e) de 0 à 15 % en poids d'adjuvants usuels.

2. Préparations selon la revendication 1, caractérisées en ce qu'elles contiennent
a) de 2 à 45 % en poids d'une composition de substances actives composée
a1) de glufosinate ou ses sels et au moins
a2) d'une substance active herbicide dispersée dans un rapport de 1:10 à 10:1 des substances a1:a2,
b) de 1,5 à 24 % en poids par rapport à la substance active d'un agent de surface pris dans le groupe des α-oléfinesulfonates à longue chaîne,
c) de 1 à 10 % en poids, par rapport à la substance active, de co-agent de surface,
d) de 15 à 50 % en poids d'eau et
e) de 5 à 10 % en poids d'adjuvants usuels.

3. Préparations selon la revendication 1, caractérisées en ce qu'elles contiennent en tant que substances actives a2) des herbicides solides dispersés pris dans le groupe comprenant des phénylurées et des triazines.

4. Préparations selon la revendication 3, caractérisées en ce que les substances actives solides dispersées sont prises dans le groupe comprenant la diurone et la triazine.

5. Préparation selon la revendication 1 ou 2, caractérisée en ce que la substance active dispersée solide est la diurone.

6. Préparations selon une ou plusieurs des revendications 1 à 5, caractérisées en ce que l'on utilise en tant que substance active du type a1) le sel du glufosinate-ammonium.

7. Préparations selon une ou plusieurs des revendications 1 à 6, caractérisées en ce que l'on utilise en tant que constituant b) un sel de sodium d'(α-oléfine en C₁₂-C₂₀)-sulfonate ayant une portion prédominante en C₁₄-C₁₆.

8. Procédé pour la préparation des préparations définies selon une ou plusieurs des revendications 1 à 7, caractérisé en ce que l'on mélange les constituants a) à e) et que l'on broie finement dans un broyeur à dispersion ou colloïdal.

9. Procédé pour la lutte contre la végétation nuisible, caractérisé en ce que l'on applique une quantité efficace d'une préparation définie selon une ou plusieurs des revendications 1 à 7 aux plantes et/ou à leurs surfaces cultivables.

10. Utilisation de la composition définie selon une ou plusieurs des revendications 1 à 7 pour la lutte contre la végétation nuisible.

## Revendications (Revendications pour l'(les) Etat(s) contractant(s) suivant(s): ES)

1. Procédé pour la préparation de compositions aqueuses d'herbicides, qui contiennent le glufosinate ou ses sels sous forme dissoute et au moins une autre substance active herbicide sous forme dispersée, caractérisées en ce que l'on mélange les composants
a) de 0,1 à 60 % en poids d'une composition de substances actives composée
a1) de glufosinate ou ses sels et au moins
a2) d'une substance active herbicide dispersée dans un rapport de 1:100 à 100:1 des substances a1:a2,
b) de 0,5 à 30 % en poids par rapport à la substance active d'un agent de surface pris dans le groupe des α-oléfinesulfonates à longue chaîne,
c) de 0,5 à 20 % en poids par rapport à la substance active d'un ou plusieurs co-agents de surface pris dans le groupe comportant des produits de condensation à base de composés aromatiques, d'alcanals et de disulfites, des produits de condensation à base d'acides naphtalènesulfoniques ou de leurs sels comme les lignosulfonates,
d) de 10 à 70 % en poids d'eau et
e) de 0 à 15 % en poids d'adjuvants usuels,
et on broie finement dans un broyeur à dispersion ou colloïdal.

2. Procédé selon la revendication 1, caractérisé en ce que l'on utilise
a) de 2 à 45 % en poids d'une composition de substances actives composée
a1) de glufosinate ou ses sels et au moins
a2) d'une substance active herbicide dispersée dans un rapport de 1:10 à 10:1 des substances a1:a2,
b) de 1,5 à 24 % en poids par rapport à la substance active d'un agent de surface pris dans le groupe des α-oléfinesulfonates à longue chaîne,
c) de 1 à 10 % en poids, par rapport à la substance active, de co-agent de surface
d) de 15 à 50 % en poids d'eau et
e) de 5 à 10 % en poids d'adjuvants usuels.

3. Procédé selon la revendication 1, caractérisé en ce qu'on utilise en tant que substances actives a2) des herbicides solides dispersés du groupe contenant des phénylurées et des triazines.

4. Procédé selon la revendication 3, caractérisé en ce que les substances actives solides dispersées sont prises dans le groupe comportant la diurone et la triazine.

5. Procédé selon la revendication 1 ou 2, caractérisé en ce que la substance active dispersée solide est la diurone.

6. Procédé selon une ou plusieurs des revendications 1 à 5, caractérisé en ce que l'on utilise en tant que substance active du type a1) le sel glufosinate-ammonium.

7. Procédé selon une ou plusieurs des revendications 1 à 6, caractérisé en ce que l'on utilise en tant que constituant b) un sel de sodium d'(α-oléfine en C₁₂-C₂₀) sulfonate ayant une portion prédominante en C₁₄-C₁₆.

8. Procédé pour la lutte contre la végétation nuisible, caractérisé en ce que l'on applique une quantité efficace d'une préparation définie selon une ou plusieurs des revendications 1 à 7 aux plantes et/ou à leurs surfaces cultivables.

9. Utilisation de la composition définie selon une ou plusieurs des revendications 1 à 7 pour la lutte contre la végétation nuisible.
